# EUROPEAN PATENT APPLICATION

(11) **EP 1 193 102 A2**
(43) Date of publication of application: **03.04.2002**
(21) Application number: 01122484.7
(22) Date of filing: 20.09.2001
(51) Int. Cl.: B60K 17/34

(54) **Drive power transmission apparatus**

(30) Priority: 20.09.2000 JP 2000286051
(71) Applicant: TOCHIGI FUJI SANGYO KABUSHIKI KAISHA, Tochigi-shi, Tochigi-ken (JP); Jatco TransTechnology Ltd., Fuji-shi, Shizuoka-ken (JP)
(72) Inventor: Teraoka, Masao, c/o Tochigi Fuji Sangyo K.K., Tochigi-shi, Tochigi-ken (JP); Nagai, Masayuki, c/o Jatco TransTechnology Ltd., Fuji-shi, Shizuoka-ken (JP)
(74) Representative: Viering, Jentschura & Partner

(57) **Abstract**

A power transmission apparatus has a transmission mechanism (3) having an input shaft (19), speed changing units (7) and (9) disposed coaxially therewith, and a power distribution apparatus (5) linked to sub-shaft (31) via a power transmission mechanism (47) disposed in parallel with the sub-shaft (31), which transmits input rotation from output shafts (41, 43) to front and rear wheels.

## Description

### BACKGROUND OF THE INVENTION

### 1. Field of the Invention

The present invention relates to a drive power transmission apparatus in a four-wheel-drive vehicle, in which a drive power distribution apparatus is assembled within a sub-axle type transmission apparatus.

### 2. Related Art

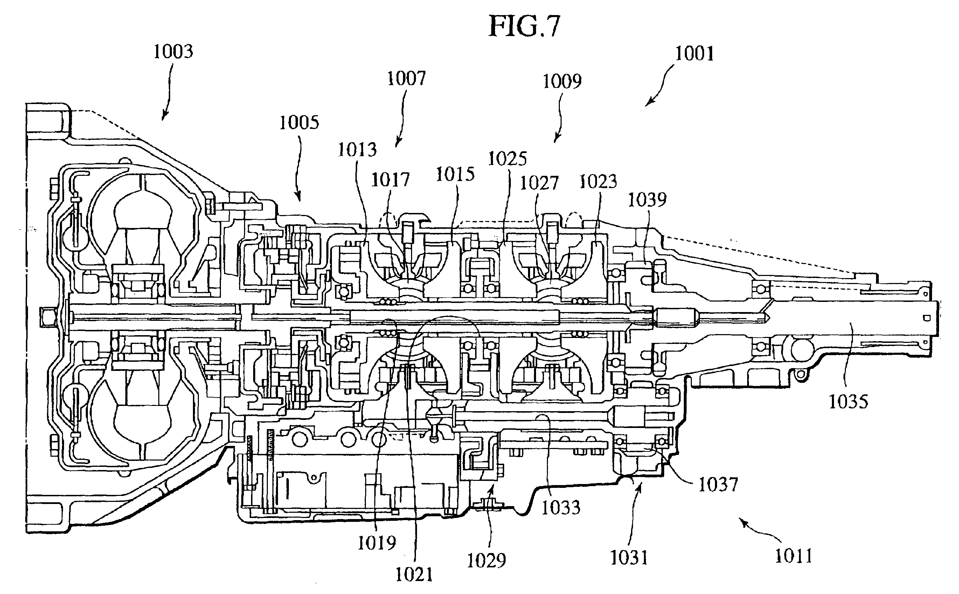

Language in the Japanese unexamined patent application publication 8-21503 describes a sub-shaft toroidal type stepless transmission, denoted by reference numeral 1001 in Fig. 7 of the accompanying drawings.

The toroidal type stepless transmission 1001 is used in a dual-shaft drive vehicle, and has a torque convener 1003, a forward/reverse switching mechanism 1005, stepless transmission mechanisms 1007 and 1009, and an output unit 1011.

The drive power of an motor is transmitted from the torque converter 1003 to the forward/reverse switching mechanism 1005. The forward/reverse switching mechanism 1005 is formed by a planetary gear and multivane clutch or the like, and performs switching in accordance with the rotational direction of the transmitted drive power, being either forward or reverse, which is then transmitted to the stepless transmission mechanisms 1007 and 1009.

The stepless transmission mechanism 1007 has a pair of input disc 1013 and output disc 1015, a friction roller 1017, an input shaft 1019, and an output shaft 1021, and the stepless transmission mechanism 1009 has a pair of input disc 1023 and output disk 1025, a friction roller 1027, and also, in common with the stepless transmission mechanism 1007, has the input shaft 1019 and the output shaft 1021.

The input shaft 1019 is linked to the forward/reverse switching mechanism 1005, and the output shaft 1021 is disposed at the outer periphery of the input shaft 1019.

The input disc 1013, the output disc 1015, the input disc 1023, and the output disc 1025 are each disposed so that the profiles of the friction surfaces thereof form a circles and are in mutual opposition, the input discs 1013 and 1023 are fixed to the input shaft 1018, and the output disks 1015 and 1025 are fixed to the output shaft 1021.

The friction rollers 1017 and 1027 are pressed up against the friction surfaces of the input disc 1013 and output disk 1015, and the friction surfaces of the input disk 1023 and the output disc 1025, respectively, drive power transmitted from the forward/reverse switching mechanism 10015 to the input shaft 1013 being transmitted via the friction rollers 1017 and 1027 by the frictional force developed at these friction surfaces to the output shafts 1015 and 1025 and causing the output shaft 1021 to rotate.

When the above occurs, if the friction rollers 1017 and 1027 are rocked so as to change the angle of inclination, there is a change in the radius of contact with each disc, so that, for example, if an inclination is imparted in a direction so that the radius of contact between the friction rollers 1017 and 1027 with the input discs 1013 and 1023 is increased, the radius of contact with the output discs 1015 and 1025 decreases, the speed of the output shaft 1021 increases, and if the imparted inclination is in the reverse direction the speed of the output shaft 1021 is reduced.

The output unit 1011 has gear sets 1029 and 1031, a sub-shaft 1033, and output shaft 1035 and the like.

The gear set 1029 is linked to the output shaft 1021 and the sub-shaft 1033, and the gear set 1031 has a gear 1037 on the sub-shaft 1033 and a gear 1039 on the sub-shaft 1035, the sub-shafts 1033 and 1035 being mutually linked.

The output shaft 1035 is disposed coaxially with respect to the torque converter 1003, the forward/reverse switching mechanism, and the stepless transmission mechanisms 1007 and 1009, and the sub-shaft 1033 is parallel to these elements.

Drive power output from the stepless transmission mechanisms 1007 and 1009 to the output shaft 1021 is sent to the wheel from the gear set 1029, via the sub-shaft 1033, the gear set 1031, and the output shaft 1035.

As described above, a stepless toroidal transmission 1001 is used in a two-wheel-drive vehicle. For use in a four-wheel-drive vehicle, to reduce the size and weight of the vehicle and enable the achievement of a low-cost four-wheel-drive vehicle, a power distribution unit is combined with an existing transmission for a two-wheel-drive vehicle.

In the case of a stepless toroidal transmission 1001, however, in which the output unit of a sub-shaft type transmission is made up of a sub-shaft 1033, a gear set 1031, and an output shaft 1035 and the like, if the input of a power distribution unit is linked to the output shaft 1035, both the axial-direction length of the combined transmission and power distribution unit increases, and the combined weight increase.

With an increased axial-direction length, it is necessary to make a change in the propeller shaft and casing (transmission case and power distribution unit case), thereby causing a great increase in cost.

Existing transmissions have idle gears and torque-adjusting gear sets and the like for the purpose of rotational direction adjustment. For example, there is a case in which a gear set corresponding to the gear set 1031 of the stepless toroidal transmission 1001 has a gears 1037 and 1039 on the sub-shaft 1033 and the output shaft 1035, and an idler gear linked thereto, and a case in which this idler gear and the gear 1039 on the output shaft 1035 serving as a gear set for torque adjustment.

If a power distribution unit is assembled together with transmission having such an idler gear or torque adjustment gear, it is difficult to use the idler gear or torque adjustment gear effectively, and if these are forcibly used, as described above, in addition to an overall increase in size of the combined transmission and power distribution unit, it becomes difficult to achieve a reduction in cost.

### SUMMARY OF THE INVENTION

Accordingly, it is an object of the present invention to provide a lightweight, compact, and low-cost power transmission apparatus, by combining various sub-shaft type transmission apparatuses with a power distribution apparatus.

More specifically, a first aspect of the present invention provides a power transmission apparatus comprising: a transmission apparatus outputting drive power of a motor from an input shaft, via a transmission mechanism disposed coaxially therewith, to a sub-shaft disposed in parallel thereto; and a power distribution apparatus, linked to the sub-shaft via a power transmission mechanism disposed in parallel to the sub-shaft, for transmitting input rotation, via respective output shafts, to a front-wheel end and a rear-wheel end, wherein the output shaft to the front-wheel end is coaxially linked to a front end of a front wheel propeller shaft, and the output shaft to the rear-wheel end is coaxially linked to a front end of a rear-wheel propeller shaft.

By linking the transmission apparatus sub-shaft and the power distribution apparatus via a power distribution mechanism disposed in parallel to the sub-shaft in this manner, the present invention can be used with existing two-wheel-drive power transmission apparatuses as a power transmission for a four-wheel-drive vehicle.

Because it is possible in configuring the power distribution apparatus of the present invention to use the sub-shaft of the transmission as is, not only is it not necessary to change the axial dimensions of the sub-shaft, but also it is possible to either reduce or eliminate change, for example, in the layout of surrounding members or the casing housing the power distribution apparatus.

Because the power transmission mechanism is disposed so as to overlap and surround the sub-shaft or sub-shaft type transmission apparatus, the power distribution apparatus (transmission and power distribution apparatus) are commensurately reduced in size in the axial direction, thereby resulting in a great improvement in mountability in a vehicle.

According to the configuration of the present invention, in which the sub-shaft of a sub-shaft type transmission apparatus is with a power distribution apparatus by a power transmission mechanism, in addition to eliminating the need for the gear set 1031, the output shaft 1035 or the idler gear and torque-adjustment gear such as used in the past, because there is no need to add new members other than the power transmission mechanism, it is possible to avoid an increase in size and weight, and a worsening of ease of mountability, thereby achieving a practical power transmission apparatus.

By reducing the size and weight of the power transmission apparatus, in addition to reducing the tendency to interfere with the casing that houses the apparatus, modification of the casing is either reduced or eliminated, thereby reducing the cost of implementation.

Because the casing can be made small, in accordance with the reduced size and weight of the power transmission apparatus, it is possible to reduce its material thickness, so that rigidity can be improved while reducing the weight thereof.

In addition to removing existing members, such as noted above, because it is possible to reduce or eliminate the need to make dimensional changes to the sub-shaft or modification of the casing, according to the present invention it is possible to achieve a very low-cost power transmission apparatus for a four-wheel-drive vehicle, without changing existing members or the layout.

This effect is particularly prominent in a case of a transmission which changes the speed of drive power from a motor input at an input shaft coaxial thereto, when used in the application of changing a two-wheel drive vehicle to a four-wheel-drive vehicle.

Additionally, in the present invention, in which the sub-shaft of a sub-shaft type transmission apparatus is with a power distribution apparatus by a power transmission mechanism, the shaft-to-shaft distances between the sub-shaft (transmission apparatus) and the power distribution apparatus shafts and the heights of the output shafts above the road surface can be arbitrarily established, there is a great enhancement in the degree of freedom in layout, making it possible to use a given apparatus in a wide range of different vehicles.

By adjusting the shaft-to-shaft distances and height above the road surface, it is possible to prevent interference between the output shafts of the power distribution apparatus and the casing and surrounding members.

Using a chain-type transmission mechanism as the power transmission mechanism, it is possible by changing the length of the chain to freely adjust the above-noted shaft-to-shaft distance and height above the road surface, thereby improving the degree of freedom in layout, while eliminating the need for intermediate members between the sprockets, thereby reducing the parts count, the weight, and the cost.

In addition, with a configuration in which the output shafts of the power distribution apparatus are disposed coaxially with the front and rear propeller shafts, compared with a configuration in which the output shafts and propeller shafts are not coaxially disposed, the compactness of the power distribution apparatus in the radial direction is improved or an increase in the radial dimensions thereof is restricted, making it easier to mount in a vehicle.

Because the linking structure to the power transmission structure including the various output shafts and propeller shafts is eliminated, there is a commensurate reduction in weight, size, and cost.

The "motor" as used above will be understood herein as meaning an internal combustion engine, or a motor converting electrical energy to rotative power.

A second aspect of the present invention is a variation on the power transmission apparatus according to the first aspect, wherein one output shaft outputs the rotation by a meshing of gear at a first angle, and the other output shaft outputs the rotation by a meshing of gear at a second angle different from the first angle and achieves operation and an effect equivalent to that of the first aspect.

According to the second aspect, the output shafts have an improved freedom of layout, because they are free from interference with peripheral fixing members such as a vehicle body frame.

Moreover, because the output shafts do not axially overlap, facilitated assemblage (for example, arrangement of a coupling is facilitated in a later-descried embodiment) allows provision of an ensured support to the respective output shafts.

Further, as will be seen from the embodiment, the meshing reaction forces to be received by output gears (42, 51) from a common idler are different in direction, that is, dispersed, so that radial loads acting on shafts of the idlers are have dispersed directions, facilitating the design of bearings.

A third aspect of the present invention is a variation on the power transmission apparatus according to either the first or second aspect, wherein the power transmission mechanism is an idler gear linking a sub-shaft and a power distribution apparatus, and achieves operation and an effect equivalent to that of the first and/or second aspect.

Because a power transmission mechanism formed by one or a plurality of idler gears is simple and lightweight, it is possible to achieve a further improvement in the lightness and compactness of the power transmission apparatus.

By changing the number of idler gears, it is possible to arbitrarily change the rotational direction of drive power and the shaft-to-shaft distance and height above the road surface, thereby achieving an improvement in the degree of freedom in layout.

A fourth aspect of the present invention is a variation on the power transmission apparatus according to any of the first to third aspect, wherein the power distribution apparatus has a differential mechanism allowing differential rotation between the output shafts.

With this configuration, the use of the differential mechanism means that drive power of the motor is constantly sent to the front and rear wheels, thereby enabling use in a full-time four-wheel-drive vehicle.

In a case of a differential mechanism enabling adjustment of the torque distribution between the front and rear wheels (for example, in a gear-type differential mechanism by changing the front-wheel gear ratio and rear-wheel gear ratio), it is possible to set the ratio of distribution of power between the front and rear wheels to a desired value.

A fifth aspect of the present invention is a variation on a power transmission apparatus according to any of the first to third aspects, wherein the power distribution apparatus transmits drive power to one output shaft, the drive power to the other shaft being limited to a desired amount, responsive to the condition at the one output shaft, and a coupling is provided which cuts off the drive power.

By using such a coupling, it is possible to send just the required drive power to the required wheels, in response to road conditions (for example, the spinning of one of a wheel linked to one of the output shafts), the running condition of the vehicle, and the steering condition, thereby providing an improvement in negotiation of rough roads, startup performance, and acceleration performance, as well as improvement of motor fuel economy, turning performance, and steering performance.

In a configuration which uses a coupling that is smaller and lighter than a differential mechanism, in implementing a power transmission apparatus of the present invention, an increases in size and weight are prevented, and there is an improvement in mountability in a vehicle.

A sixth aspect of the present invention is a variation on a power transmission apparatus according to the fifth aspect, wherein the coupling is a rotational differentially adaptive coupling, which sends a drive power responsive to a reduction in drive power transmitted to one output shaft to the other output shaft.

A rotational differentially adaptive coupling is, for example, one in which the shear resistance of a viscous fluid transmits drive power responsive to a rotational difference between the front and rear wheels, wherein the rotational difference drives a pump so as to engage a frictional clutch, so that the pump work and the friction clutch frictional resistance transmit the drive power, or one in which centrifugal force imparted to a flyweight presses a friction clutch and transmits drive power.

In either case, the larger the spinning rotational speed of the wheel on one side becomes, the greater is the drive power sent to a wheel on the gripping side by the rotational differentially adaptive coupling, thereby improving the ability of the vehicle to negotiate rough roads, startup performance, and acceleration performance.

Because a rotational differentially adaptive coupling, in contrast to a torque control coupling, does not use an actuator such as a hydraulic actuator, a solenoid, or an electric motor, there is a further improvement in the compactness and lightness of the power transmission apparatus.

A seventh aspect of the present invention is a variation on a power transmission apparatus according to the fifth aspect, wherein the coupling, responsive to a change in the drive power transmitted to one output shaft, can arbitrarily control the amount of drive power sent to the other output shaft.

This coupling is a torque control coupling, which, by means of an actuator such as a hydraulic actuator acting in response to a fluid pressure or an actuator making use of a solenoid or motor, controls the engaging force of a friction clutch, and by using this type of torque control coupling, it is possible in response to the spinning condition of a wheel at one output shaft side (a Toad condition), the running condition of the vehicle, or the steering condition or the like to arbitrarily adjust the amount of drive power sent to the wheel at the other output shaft side.

In this manner, because it is possible to adjust the ratio of power distribution between the four-wheel-drive condition and the two-wheel-drive condition, it is possible to achieve a sufficient improvement in the ability to negotiate rough roads, starting performance, and acceleration performance.

An eighth aspect of the present invention is a variation on a power transmission apparatus according to the fifth aspect, wherein the coupling is a coupling enabling switching between a two-wheel-drive mode, in which the coupling transmits drive power to only one output shaft, and a four-wheel-drive mode, in which the coupling transmits drive power equally to both output shafts.

If this type of switching coupling is used, because it is possible, for example, to send drive power to a rear wheel at all times, and send drive power to the front wheel in on demand when necessary, thereby enabling running that is similar to that of a part-time four-wheel-drive vehicle.

Because a switching type coupling has a large torque capacity because of its meshing transmission in spite of its compact size and light weight, it not only provides a reduction in the weight and size of the power transmission apparatus, but also transmits sufficient drive power to the wheels, thereby greatly improving the power performance of the vehicle.

A ninth aspect of the present invention is a variation on the power transmission apparatus of any one of the first to eigth aspect, wherein the speed changing mechanism of the transmission apparatus is a stepless toroidal transmission having an input disc linked to an input shaft, an output disc linked to a transmission member on the output side, and a friction roller making contact with the discs, wherein a rocking operation of the friction roller changes the rotative speed of the input disc, which is transmitted to the output disc, and wherein a rotational direction conversion mechanism, which converts the drive power to forward rotation, is disposed between the transmission member and the sub-shaft.

According to this aspect of the present invention, in which the sub-shaft and the power distribution apparatus are linked by a power transmission mechanism, and which achieves an effect equivalent to the effect of the first aspect through the seventh aspect, because it is possible to locate the power transmission apparatus on the outside of the radial direction projected surface of the speed changing mechanism of the stepless toroidal transmission, locating and removal of power transmission path components such as propeller shafts and other linking components is facilitated, resulting in an associated reduction in cost.

Stepless toroidal transmissions include a double-cavity type, in which two output discs are disposed back-to-back, with two input discs disposed on both sides in the axial direction, and a single-cavity type, in which there is only one each of the input and output discs, a sub-shaft being required in either case to extract drive power from the output disc.

The present invention, in which an existing sub-shaft type transmission apparatus and a power distribution apparatus are linked by a power transmission mechanism, thereby enabling the achievement of a compact, lightweight, and low-cost power transmission apparatus for a four-wheel-drive vehicle, is extremely suitable for use with this type of stepless toroidal transmission.

In spite of a compact and lightweight configuration, by using a stepless toroidal transmission, interruption of torque during speed changing is eliminated, enabling running that is free from speed-change shock, linear speed-change response to accelerator pedal operation, and running under conditions that provide the most efficient use of the motor, thereby providing a great improvement in fuel economy, as well as many other advantages of a stepless toroidal transmission.

### BRIEF DESCRIPTION OF THE DRAWING

The above and other features will be better understood from the exemplary embodiments described below, taken together with the drawings, in which:
Fig. 1 is a skeleton representation of a first embodiment of the present invention;
Fig. 2A is a view of Fig. 1 from the direction of arrow A;
Fig. 2B is a view of a modification of the first embodiment;
Fig. 3 is a skeleton representation of a second embodiment of the present invention;
Fig. 4 is a skeleton representation of a third embodiment of the present invention;
Fig. 5 is a skeleton representation of a fourth embodiment of the present invention;
Fig. 6 is a skeleton representation showing the power train in a four-wheel-drive vehicle according to embodiments of the present invention; and
Fig. 7 is a cross-sectional view of related art.

### DETAILED DESCRIPTION OF THE PREFERRED EMBODIMENTS

Embodiments of the present invention are described in detail below, with reference made to relevant accompanying drawings. Like members are designated by like reference characters.

### First Embodiment

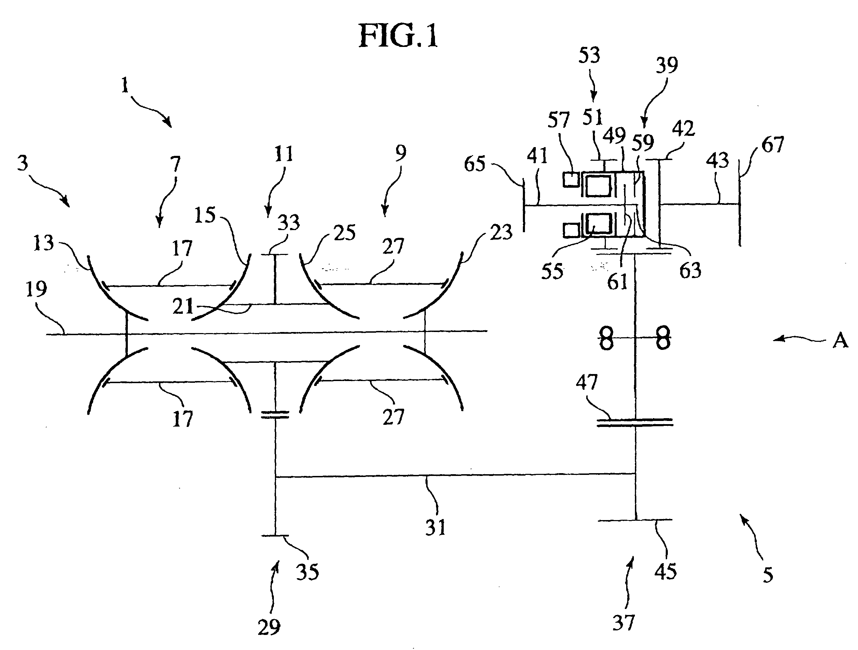

A power transmission apparatus 1 according to a first embodiment of the present invention is illustrated in Fig. 1, Fig. 2A, and Fig. 6.

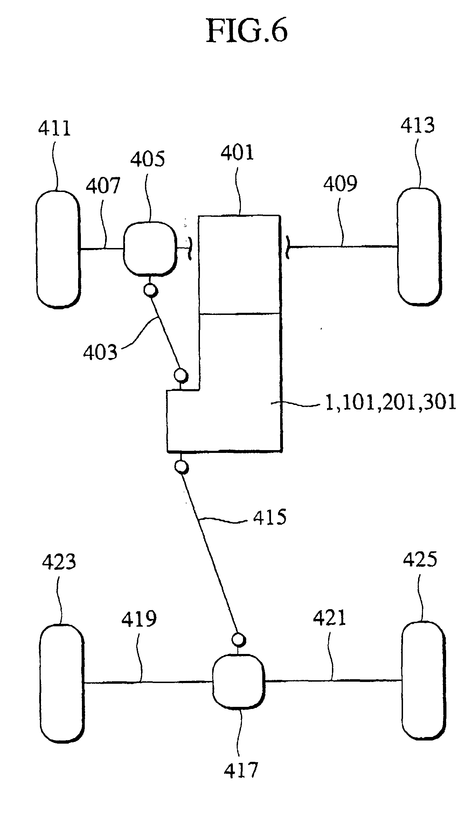

The power transmission apparatus 1 has the features of the first, second, third, fifth, seventh, and ninth aspects of the present invention. Fig. 1 shows the power transmission apparatus 1, and Fig. 6 shows the power transmission system of a four-wheel-drive vehicle using a power transmission apparatus according to various embodiments. In Fig. 1, the left side is the forward end (motor 701 end) of the vehicle, and elements not assigned reference numerals have not been shown.

As shown in Fig. 1, the power transmission apparatus 1 has a power distribution apparatus 5 assembled together with a double-cavity stepless toroidal transmission 3 (sub-shaft type transmission apparatus).

The power train of Fig. 6 has a longitudinally disposed motor 401 and a power transmission apparatus 1, a front-wheel propeller shaft 403, a front differential 405 (differential apparatus distributing drive power from the motor between the left and right front wheels), front axles 407 and 409, left and right front wheels 411 and 413, a rear-wheel propeller shaft 415, a rear differential 417 (differential apparatus distributing drive power from the motor between the left and right rear wheels), rear axles 419 and 421, and left and right rear wheels 423 and 425.

The drive power of the motor 401 is distributed between the front and rear by the power transmission apparatus 1. The drive power distributed to the front wheels is transmitted from the propeller shaft 403 to the front differential 405, and from the front differential 405 via the front axles 407 and 409 to the left and right front wheels 411 and 413. The drive power at the rear side is transmitted to the rear differential 417 from the propeller shaft 415, and from the rear differential 417 via the rear axles 419 and 421 to the rear wheels 423 and 425.

The stepless toroidal transmission 3 has a torque converter, a forward/reverse switching mechanism, stepless speed changing units 7 and 9 (speed changing mechanisms), and a output unit 11, and transmits drive power from the motor 401 from the torque converter to the forward/reverse switching mechanism.

The forward/reverse switching mechanism is a double-pinion planetary gear mechanism, whereby transmitted drive power is input to a sun gear, and the output is switched between the sun gear and the pinion gears, so as to switch the direction of drive power rotation in response to the forward and reverse travel of the vehicle, this drive power being transmitted to the stepless speed changing units 7 and 9.

The stepless speed changing unit 7 has a disc pair of an input disc 13 and an output disc 15, a friction roller 17, an input shaft 19 and an output shaft 21 (output-side transmission member), and the stepless speed changing unit 9 has a disc pair of an input disc 23 and an output disc 25, and a friction roller 27, and also has, in common with the stepless transmission mechanism 7, the input shaft 19 and the output shaft 21.

The input shaft 19 is linked to the output shaft of the forward/reverse switching mechanism, and the output shaft 21 is disposed so as to be freely rotatable with respect to the outer periphery of the input shaft 19.

The input disc 13 and output disc 15, and the input disc 23 and output disc 25 are each disposed so that the profiles of the friction surfaces thereof from a circle and are in mutual opposition. The input discs 13 and 23 are fixed to the input shaft 19 at the outside in the radial directions of the output discs 15 and 25, and the output discs 15 and 25 are fixed to the output shaft 21, and are disposed in mutual back-to-back opposition.

The friction rollers 17 and 27 press against the friction surfaces of the input disc 13 and output disc 15, and against the friction surfaces of the input disc 23 and output disc 25, respectively, and drive power transmitted from the forward/reverse switching mechanism to the input shaft 19 is transmitted by the force of friction developed at these friction surfaces friction roller the input discs 13 and 23, via the friction rollers 17 and 27, to the output discs 15 and 25.

When this occurs, when the rotational axis of each disc is made to be slightly eccentric with respect to the rotational axis of the friction rollers 17 and 27, the disc rotational force causes the point of contact on the friction rollers 17 and 27 to be pushed outward toward the outer periphery. Because the discs are rotating at a high speed and achieve a large outward-directed force, the angle of inclination of the friction rollers 17 and 27 responses with a very high speed.

When the angle of inclination of the friction rollers 17 and 27 changes, the contact radius with the discs changes. For example, if an inclination is imparted to the friction rollers 17 and 27 in a direction so that the radius of contact with contact radius with respect to the input discs 13 and 23 increases, and the radius of contact with respect to the output discs 15 and 25 decreases, the rotational speed of the output shaft 21 increases, and an inclination in the reverse direction is imparted the rotational speed of the output shaft 21 is reduced.

As noted above, because the input discs 13 and 23 are fixed on the input shaft 19 in mutual opposition, and the output discs 15 and 25 are fixed on the output shaft 21 in mutual opposition, they are pressed by the friction rollers 17 and 27, and the thrust forces generated in the discs are cancelled out within the input shaft 19 and the output shaft 21, respectively, so that they have no external influence.

The output unit 11 has a gear set 29 (rotational direction switching mechanism), and a sub-shaft 31, and the sub-shaft 31 is disposed in parallel with the input shaft 19 and the output shaft 21.

The gear set 29 has a drive gear 33 fixed to the output shaft 21, and a driven gear fixed to the sub-shaft 31, and links the output shaft 21 and the sub-shaft 31.

The drive power of the motor, which causes the input shaft 19 of the stepless toroidal transmission 3 is reverse rotation between the input discs 13 and 23, the friction rollers 17 and 27, and the output discs 15 and 25, and is converted to forward rotation by the gears 33 and 35 of the gear set 29, and transmitted to the sub-shaft 31.

Thus, the gear set 29 serves as a rotational direction conversion mechanism for the purpose of causing the sub-shaft 31 to rotate in the forward direction.

As shown in Fig. 1, the power distribution apparatus 5 has a gear set 37, a torque control type coupling 39, and a pair of output shafts 41 and 43.

The gear set 37 has a drive gear 45 fixed to the sub-shaft 31, an idler gear 47 (power transmission mechanism), a driven gear 42 linked to the output shaft 43, and a driven gear 51 linked to the clutch housing 49 of the coupling 39.

The torque control type coupling 39 has a main clutch 53, a pilot clutch and cam mechanism and armature, denoted by the reference numeral 55, and a solenoid 57.

An outer plate 59 of the main clutch 53 mates with the clutch housing 49, and the inner plate 61 mates with a clutch hub 63 linked to the output shaft 41.

When the solenoid 57 is excited the armature is pulled in and the pilot clutch is pressed, so that it is engaged, causing torque between the clutch housing 49 and the clutch hub 63 to be applied to a cam mechanism, the generated cam thrust force causing pressure on the main clutch, so that the torque control coupling 39 is engaged.

The output shaft 41 disposed facing forward, and is linked with a flange 65 at the end thereof. The output shaft 43 is disposed facing reward, and is linked with a flange 67 at the end thereof.

The output shaft 41 with the flange 65 and a front end of the front-wheel propeller shaft 403 are coaxially disposed, and mutually linked together. The gear 42 is linked to the output shaft 43. The output shaft 43 with the flange 67 and a front end of the rear wheel propeller shaft 415 are coaxially disposed and mutually linked together.

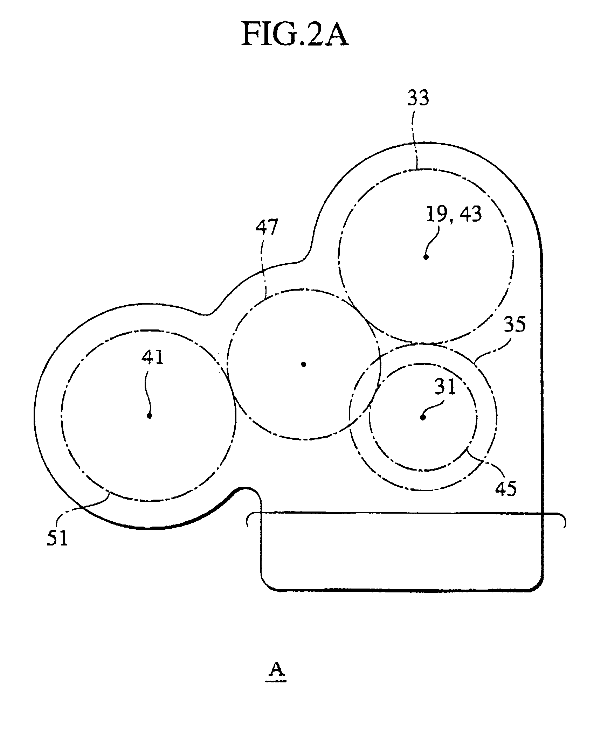

As shown in Fig. 2A, the gear 51 and the gear 42 mesh with the idler gear 47, at locations different in phase and circumferentially spaced from each other by a predetermined angle.

It is noted that the output shaft 41 at the front-wheel end is disposed off at an obliquely downwardly spaced location. This location is laterally offset to avoid interference with the transmission in the case the front wheel propeller shaft is extended, and further it is set to a lower position for better lubrication or cooling of the torque controllable coupling. The output shaft 43 at the rear-wheel end is coaxially disposed in an axial space at the rear end of the rotation shaft 1 of the transmission, allowing for the apparatus to be axially compact in the output route of torque of the transmission.

In this manner, the rear wheel side is linked via the clutch housing 49, drive power being transmitted thereto bypassing the coupling 39, whereas at the front wheel side drive power is transmitted via the coupling 39.

In this manner, drive power of the motor 401 is constantly sent to the rear wheels, and when the solenoid 57 is excited drive power is sent to the front wheels as well, via the torque control coupling 39, in which case the vehicle operates in the four-wheel-drive mode.

In the four-wheel-drive mode, even over a poor road surface or a low-µ road surface, differential rotation between the front and rear wheels is prevented, thereby improving the ability of the vehicle to negotiate poor road surfaces, starting performance, acceleration performance, body stability, and direction stability.

In this mode of operation, by controlling the excitation current of the solenoid 57, it is possible to vary the slippage of the pilot clutch, thereby varying the transmitted torque applied to the cam mechanism, and varying the cam thrust, so that the linking force of the main clutch 53 (coupling 39) is adjusted.

Given the above, if the linking force of the main clutch 53 is adjusted in this manner in response to the vehicle running condition, or the road condition or the like, the drive power sent to the front wheels changes, making it possible to ideally control the ratio of drive power distribution between the front and rear wheels, so that it is possible to greatly improve such characteristics as power performance, negotiating of rough roads, direction stability, and turning on rough roads.

When the excitation of the solenoid 57 is stopped, the pilot clutch is released, so that the cam thrust of the cam mechanism is lost, causing the coupling 39 to be released, thereby releasing the front wheels, so that the vehicle operates in the two-wheel-drive mode, thereby improving the turning and corning performance, and the fuel economy of the motor 401.

In the above-described configuration, because the linking force of the main clutch is amplified by the cam mechanism, it is possible to achieve a large clutch capacity with even a small coupling 39, thereby enabling the transmission of sufficient drive power to the front wheels and a great improvement in power performance of the vehicle, in spite of the light weight and compactness of the power transmission apparatus 1.

By achieving this compactness, there is a further improvement to be had in the ease with which the power transmission apparatus 1 can be mounted in a vehicle.

In the present invention, as described above, by linking the sub-shaft 31 of the stepless toroidal transmission 3 with the power distribution apparatus 5 by means of the gear set 27 (idler gear 47) disposed in parallel with the sub-shaft 31, an existing stepless toroidal transmission 3 is used to obtain a power transmission apparatus for a four-wheel-drive vehicle.

In configuring the power transmission apparatus 1, because it is possible to use the existing sub-shaft 31 as is, not only is there no need to change the axial dimension of the sub-shaft 31, but additionally it not necessary to modify the layout of members disposed in the surrounding area, or the casing housing the power transmission apparatus 1.

Because the sub-shaft 31, the gear set 37, and the power distribution apparatus 5 are disposed coaxially in wrapped fashion, the axial direction dimension of the power transmission apparatus 1 is reduced accordingly, thereby improving the ease of mounting in a vehicle.

According to the present invention, in which the sub-shaft 31 and the power distribution apparatus 5 are linked by the gear set 37, it is not only not necessary to have the gear set 1031, output shaft 1035, or an idler gear and torque converter to serve as a linkage as required in the past between the sub-shaft and the power distribution apparatus, but also it is not necessary to add any new members other than the gear set 37, thereby preventing a worsening of the ease of mounting in a vehicle.

By making the power transmission apparatus 1 compact and light, not only the tendency for interference with the casing reduced, but also it is possible to eliminate or reduce the need to modify the casing, thereby maintaining interchangeability and reducing cost.

Because the casing can be made smaller because of the reduction in size and weight of the power transmission apparatus 1, it is possible to maintain rigidity while reducing the material thickness thereof.

As described above, because other than removing existing members it is possible eliminate or reduce the need to, for example, modify the dimensions of the sub-shaft 31 or the casing, the power transmission apparatus 1 can be used without changing the previous members or layout, thereby enabling use at an extremely low cost.

This effect is particularly prominent in a case of a transmission which changes the speed of drive power from a motor input at an input shaft coaxial thereto, when used in the application of changing a two-wheel drive vehicle to a four-wheel-drive vehicle.

Additionally, in a power transmission apparatus 1 in which the sub-shaft 31 and the power distribution apparatus 5 are linked by the gear set 37, by changing the diameters of the gears 45, 47, and 51 or changing the number of constituent gears, it is possible to arbitrarily change shaft-to-shaft distance between the sub-shaft 31 (stepless toroidal transmission 3) and the coupling 39 (output shafts 41 and 43) and the distance of the coupling 39 (output shafts 41 and 43) from the road surface, thereby improving the degree of freedom of layout, and enabling use in a wide range of vehicle types.

By adjusting the shaft-to-shaft distance and height above the road surface, it is possible to prevent interference between the coupling 39 (output shafts 41 and 43) and the casing or surrounding members.

In a power transmission mechanism formed by an idler gear 47 linking the drive gear on the sub-shaft 31 side and the driven gear 51 on the coupling 39 side, because of the simplicity of the configuration and its light weight, the power transmission apparatus 1 achieves a further improvement in compactness and ease of mounting in a vehicle.

By disposing the output shafts 41 and 43 of the coupling 39 so as to be coaxial with the propeller shafts 403 and 415 of the front and rear wheels, compared to the case in which these elements are along differing axes, compactness is achieved in the radial direction of the power transmission apparatus 1, thereby improving the ease of mounting in a vehicle.

By disposing these elements coaxially, a simplification is achieved in the power train, including the output shafts 41 and 43, and the propeller shafts 403 and 415, with an accompanying reduction in weight, improved compactness, and reduced cost.

By using a torque control coupling 39 in the power distribution apparatus 5, as described above it is possible to freely adjust the drive power distribution ratio between the front and rear wheels, in response to road conditions, acceleration, and steering, thereby enabling sufficient improvement in the ability to negotiate rough roads, starting performance, and acceleration performance and the like in a condition that approaches that of four-wheel-drive operation, and it is possible in the two-wheel-drive condition it is possible to achieve an improvement in motor fuel economy, turning performance, and cornering performance.

In a power transmission apparatus 1 in which the sub-shaft 31 and the power distribution apparatus 5 are linked by the gear set 37, because the power distribution apparatus 5 can be disposed to the outside of the stepless toroidal transmission 3 (stepless speed changing units 7 and 9) in the radial direction, locating and removal of power transmission path components such as the propeller shafts 403 and 415 and other linking components is facilitated, resulting in an associated reduction in cost.

Because the stepless toroidal transmission 3 is a double-cavity type, in which the two output discs 15 and 25 are disposed back-to-back, in the past it was necessary to have a sub-shaft 1033 in order to extract drive power from the output shafts.

Given the above, in the present invention the sub-shaft of a sub-shaft type transmission apparatus and a power distribution apparatus are linked by a power transmission mechanism, thereby enabling the achievement of a compact, lightweight, low-cost power transmission apparatus for a four-wheel-drive vehicle, making the present invention extremely suitable for use with this type of stepless toroidal transmission.

In spite of a compact and lightweight configuration of the power transmission apparatus 1, by using the stepless toroidal transmission 3, interruption of torque during speed changing is eliminated, enabling running that is free from speed-change shock, linear speed-change response to accelerator pedal operation, and running under conditions that provide the most efficient use of the motor, thereby providing a great improvement in fuel economy, as well as many other advantages of a stepless toroidal transmission.

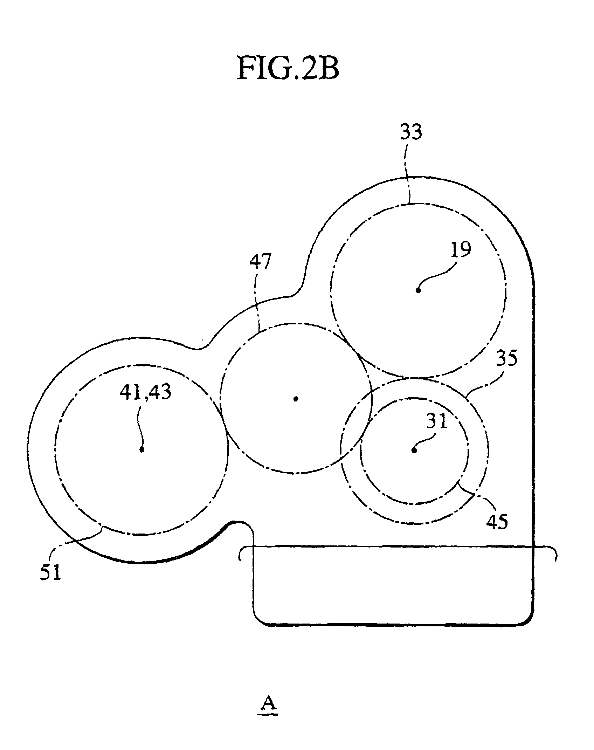

Fig. 2B shows a modification of the first embodiment, in which the gears 51 and 42 mesh with the idler gear 47, at locations identical in phase or angle and axially spaced from each other. This modification is similar in operation to the first embodiment, and has like effects thereto.

### Second Embodiment

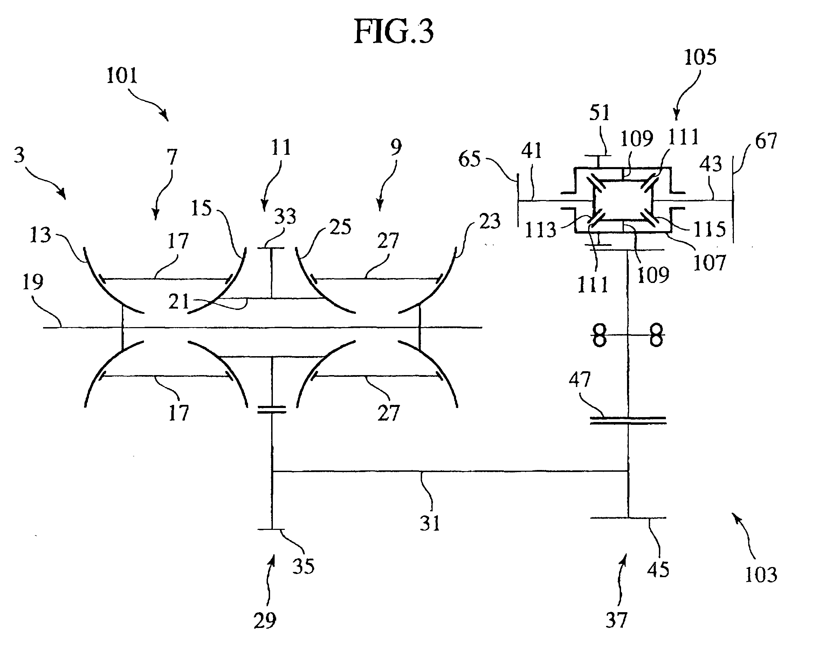

A power transmission apparatus 101 according to a second embodiment of the present invention is described below, with references made to Fig. 3 and Fig. 6.

This power transmission apparatus 101 has the features of the first, second, third, fourth, and ninth aspects of the present invention. Fig. 3 is a drawing showing the power transmission apparatus 101, the left side of which is the forward end (motor 401 end) of the vehicle, and elements not assigned reference numerals have not been shown.

As shown in Fig. 3, the power transmission apparatus 101 is a variation of the first embodiment, in which the configuration of the power distribution apparatus has been changed. The differences between the two embodiments are described below.

The power transmission apparatus 101 has a power distribution apparatus 103 assembled together with a stepless toroidal transmission 3.

The power distribution apparatus 103 has a gear set 37, a center differential 105 (differential mechanism), and output shafts 41 and 43.

The driven gear 51 of the gear set 37 is linked to a differential case 107 of the center differential 105, and transmits rotation of the sub-shaft 37 to the differential case 107 in the forward direction.

The center differential 105 has a differential case 107, a pinion shaft 109, a pinion gear 111, and front and rear side gears 113 and 115.

The pinion shaft 109 is fixed to the differential case 107, and the pinion gear 111 is supported on the pinion shaft 109. The side gears 113 and 115 each mesh with the pinion gear 111.

The side gear 113 is linked to the output shaft 41, and is linked to the front wheel side via a flange 65 and the propeller shaft 403. The side gear 115 is linked to the output shaft 43, and is linked to the rear wheel side via flange 67 and the propeller shaft 415.

Drive power of the motor 401, which causes the differential case 117 to rotate, is transmitted to the pinion gear 111 from the pinion shaft 109, and distributed between the side gears 113 and 115, being transmitted to the front and rear wheels by the above-noted power train.

When a rough road condition causes a drive resistance difference to exist between the front and rear wheels, the pinion gear 11 rotates, so that drive power is differentially distributed between the front and rear wheels.

If, for example, the front-wheel side gear 113 and rear-wheel side gear 115 are made to have differing numbers of teeth, the distribution ratio of drive power between the front and rear wheels can be changed.

In the power transmission apparatus 101 configured as described above, by using the center differential 105 as the power distribution apparatus 103, it is possible to achieve a full-time four-wheel-drive vehicle, in which drive power is always sent to both the front and rear wheels.

Additionally, with the exception of the use of the center differential 105 in place of the torque control coupling 39, the second embodiment achieves an effect equivalent to that of the first embodiment.

### Third Embodiment

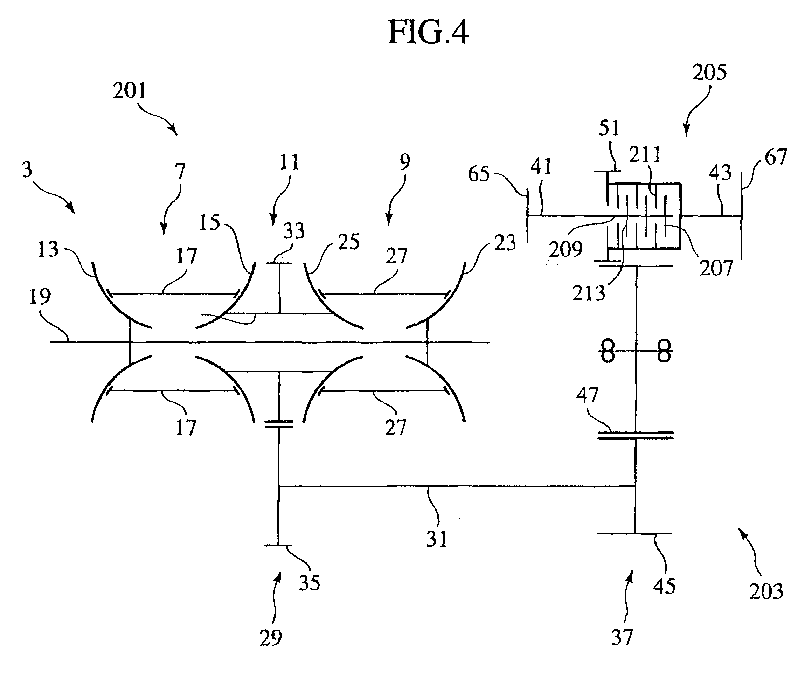

A power transmission apparatus 201 according to a third embodiment of the present invention is described below, with references made to Fig. 4 and Fig. 6.

The third embodiment has the features of the first, second, third, fifth, sixth, and seventh aspects of the present invention. Fig. 4 shows the power transmission apparatus 201, in which the left side is the forward direction of the vehicle (motor 401 side). and elements not assigned reference numerals have not been shown.

As shown in Fig. 4, the power transmission apparatus 201 is a variation of the power transmission apparatus 1 of the first embodiment, in which the configuration of the power distribution apparatus has been changed. The differences between the two embodiments are described below.

The power transmission apparatus 201 has a power distribution apparatus 203 assembled together with a stepless toroidal transmission 3.

The power distribution apparatus 203 has a gear set 37, a rotational differentially adaptive coupling 205, and output shafts 41 and 43.

The driven gear 51 of the gear set 37is linked to the housing 207 of the coupling 205, and the gear set 37 transmits rotation of the sub-shaft 31 to the housing 207 in the forward direction.

The coupling 205 has a housing 207, a hub 209 disposed within the housing 207, a large number of outer plates 211 linked to the housing 207, a large number of inner plates 213 linked to the hub 209, and a viscous fluid sealed within the housing 207.

The hub 209 is linked to the output shaft 41, and is linked via the flange 65 and the propeller shaft 403 to the front wheels. The housing 207 is linked to the output shaft 43, and is linked via the flange 67 and the propeller shaft 415 to the rear wheels.

In this manner, the rear wheel side is linked via the housing 207, driving power being transmitted thereto bypassing the coupling 205, whereas at the front wheel side drive power is transmitted via the coupling 205.

In the coupling 205, when relative rotation (rotational differential) occurs between housing 207 (outer plates 211) and the hub 209 (inner plates 213), the shear resistance of the viscous fluid causes transmission of drive power from one to the other, the amount of drive power transmitted being larger, the larger is the relative rotational speed.

In the above-described manner, while drive power of the motor 401 sent to the rear wheels at all times, if spinning of the rear wheels occurs because of a rough road, or at startup or acceleration, the rotational differential between the front and rear wheels causes the coupling 205 to operate, so that drive power is sent to the front wheels. This drive power is larger, the larger is the spinning rotational speed of the rear wheels, thereby greatly improving running over poor roads, startup performance, and acceleration performance.

Because the power transmission apparatus 201 uses a rotational differentially adaptive coupling, which is smaller and lighter than a differential mechanism, the configuration is made lighter and more compact, thereby improving the ease of mounting in a vehicle.

In contrast to a torque control type of coupling, because the rotational differentially adaptive coupling does not use an actuator such as a hydraulic actuator or an actuator using a solenoid or electrical motor, there is a further reduction in the weight and size of the power transmission apparatus 201.

Using the rotational differentially adaptive coupling 205, it is possible to achieve a great improvement in vehicle running performance and startup performance, even under conditions noted above, in which the wheels tend to spin.

Additionally, with the exception of the use of the rotational differentially adaptive coupling 205 in place of the torque control coupling 39, the third embodiment achieves an effect equivalent to that of the first embodiment.

Among rotational differentially adaptive couplings, in addition to the coupling 205, which transmits drive power responsive to a rotational differential, by means of the shear resistance of a viscous fluid, there is a type of coupling in which a rotational differential drives a pump so as to press on a clutch and transmit drive power by pump work and the frictional resistance of a friction clutch, and a type of coupling in which the centrifugal force imparted to a flyweight presses a friction clutch and so as to transmit drive power, and either type of coupling can be used in the present invention.

### Fourth Embodiment

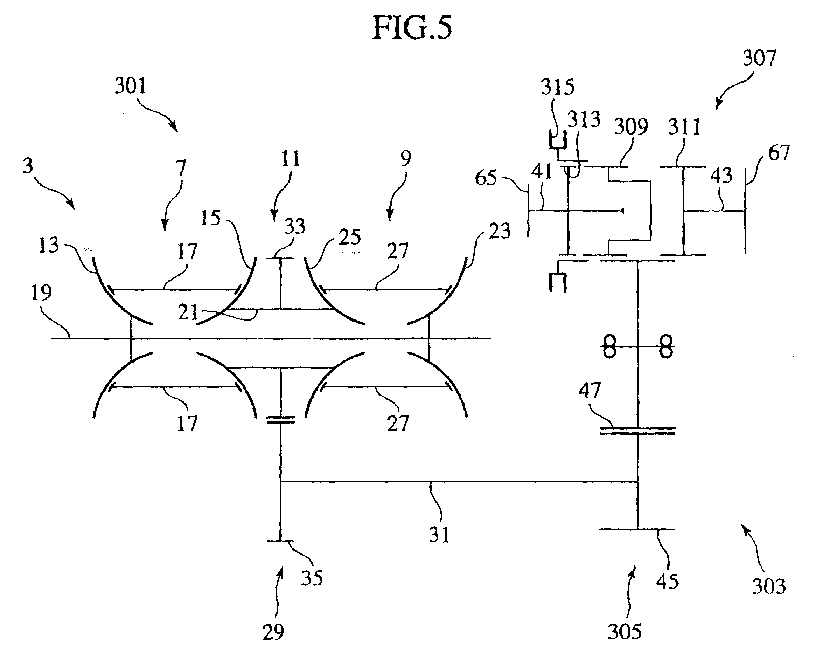

A power transmission apparatus 301 according to a fourth embodiment of the present invention is described below, with references made to Fig. 5 and Fig. 6.

The fourth embodiment has the features of the first, second, third, fifth, eighth, and ninth aspects of the present invention. Fig. 5 shows the power transmission apparatus 301, and in this drawing the left side is the forward end (motor 401 end) of the vehicle, and elements not assigned reference numerals have not been shown.

As shown in Fig. 5, the power transmission apparatus 301 is a variation on the power transmission apparatus of the first aspect, wherein the configuration of the power has been changed.

The power transmission apparatus 301 has a power distribution apparatus 303 assembled together with a stepless toroidal transmission 3.

The power distribution apparatus 303 has a gear set 305, a switching type coupling 307, and output shafts 41 and 43.

The gear set 305 has a drive gear 45 fixed to a sub-shaft 31, and idler gear 47, and driven gears 309 and 311 on the switching coupling 307 side, these driven gears 309 and 311 both mating with the idler gear 47. The gear set 305 is linked to the sash 31 and to the switching coupling 307.

The switching coupling 307 has the above-noted driven gears 309 and 311, a gear 313 disposed coaxially thereto, and two-four sleeve 315.

The gear 313 is linked to the output shaft 41, and is linked via the output shaft 41, the flange 65, and the propeller shaft 403 to the front wheels. The driven gear 311 is linked to the output shaft 43, and via the output shaft 43 and propeller shaft 415 to the rear wheels.

In this manner there is a direct link to the rear wheels via the driven gear 311, so that drive power is transmitted thereto, bypassing the coupling 307. The front wheels are sent drive power, however, via the coupling 307.

The two-four sleeve 315 can mate with the gears 313 and 309, and can be moved into a 4WD position in which these are linked, or a 2WD position, in which the linkage therebetween is released.

As noted above, because drive power of the motor 401 is sent to the rear wheels at all times, when the two-four sleeve 315 is moved to the 4WD position so as to engage the switching coupling 307, drive power is sent to the front wheels, so as to place the vehicle in the four-wheel-drive condition.

If the two-four sleeve 315 is moved to the 2WD position, so that the engagement of the switching coupling 310 is broken, the front wheels are released, placing the vehicle in the two-wheel-drive condition, and improving the turning performance, the cornering performance, and the fuel economy of the motor 401.

By using the switching coupling 307 in this manner, it is possible to select four-wheel-drive operation or two-wheel-drive operation on demand as required.

Because the switching type coupling 307 has a large torque capacity because of its meshing transmission in spite of its compact size and light weight, it not only provides a reduction in the weight and size of the power transmission apparatus 301, but also transmits sufficient drive power to the wheels, thereby greatly improving the power performance of the vehicle.

By using a compact, lightweight switching type coupling 307, the power transmission apparatus 301 features reduced weight and size, thereby providing easier mounting in a vehicle.

By using a switching type coupling 307 having a large torque capacity, in addition to a great improvement in power performance of the vehicle, because it is possible to switch between four-wheel drive and two-wheel drive on demand, it is possible to achieve operation similar to a part-time four-wheel drive vehicle.

By using the switching type coupling 307, it is possible to send drive power to the front wheels only when required, in response to road conditions, running conditions, or steering conditions and the like, with an improvement in rough road performance, starting performance, and acceleration performance achieved with four-wheel drive, and an improvement in fuel economy, turning performance, and cornering performance achieved with two-wheel drive.

Additionally, with the exception of the use of switching type coupling 307 in place of the torque control coupling 39, the second embodiment achieves an effect equivalent to that of the first embodiment.

Although the foregoing embodiments are described for the example of a in which the power transmission apparatus is disposed longitudinally in a vehicle, it will be understood that this does not imply a restriction with regard to the disposition of the power transmission apparatus, and that transverse disposition is alternately possible.

It will be further understood that the differential mechanism in the present invention is not restricted to a bevel-gear type differential mechanism, and can alternately be, for example, a planetary-gear type differential mechanism, a differential mechanism in which a pinion gear slidably housed within a housing hole of the differential case links to a side gear on the output side, or a differential mechanism using a worm gear.

Additionally, the present invention is not restricted to a gear type differential mechanism, and can be applied as well in the case of a differential mechanism having a pair of friction clutches.

The friction clutch of the torque control coupling can be any one of a multivane clutch, a single-vane clutch, and a cone clutch, and these can be wet or dry type clutches.

In addition to a gear transmission mechanism, the power transmission apparatus can be a change transmission mechanism or a belt transmission mechanism.

If a chain or belt type transmission mechanism is used, by changing the length of the chain or belt, it is possible to freely adjust the shaft-to-shaft distance of the output shafts of the transmission apparatus and the power distribution apparatus, and the height of the output shafts from the road surface, thereby achieving an improved degree of freedom in layout.

Because there is no need in the present invention for intermediate members between sprockets or pulleys, there is a reduction in the parts count, as well as a reduction weight and cost.

The rotational differentially adaptive coupling is not restricted to a fluid shear resistance type as described in the case of the foregoing embodiments, and can alternatively be a type of coupling in which a rotational differential drives a pump so as to press on a clutch and transmit drive power by pump work and the frictional resistance of a friction clutch, and a type of coupling in which the centrifugal force imparted to a flyweight presses a friction clutch and so as to transmit drive power, and either type of coupling can be used in the present invention.

The torque control type coupling is not restricted to a type which uses an electrical actuator such as a solenoid or electrical motor, and can alternately be a coupling in which a friction clutch is engaged by the action of a fluid pressure clutch such as a hydraulic clutch.

According to the present invention, it is possible to achieve the effects of the above-described embodiments, by assembling a power distribution apparatus into any type of sub-shaft transmission, not only into a stepless toroidal transmission.

While preferred embodiments of the present invention have been described using specific terms, such description is for illustrative purposes, and it is to be understood that changes and variations may be made without departing from the spirit or scope of the following claims.

## Claims

1. A power transmission apparatus comprising:
a transmission apparatus outputting drive power of a motor from an input shaft, via a transmission mechanism disposed coaxially therewith, to a sub-shaft disposed in parallel thereto; and
a power distribution apparatus, linked to the sub-shaft via a power transmission mechanism disposed in parallel to the sub-shaft, for transmitting input rotation, via respective output shafts, to a front-wheel end and a rear-wheel end, wherein
the output shaft to the front-wheel end is coaxially linked to a front end of a front wheel propeller shaft, and the output shaft to the rear-wheel end is coaxially linked to a front end of a rear-wheel propeller shaft.

2. A power transmission apparatus according to claim 1, wherein one output shaft outputs the rotation by a meshing of gear at a first angle, and the other output shaft outputs the rotation by a meshing of gear at a second angle different from the first angle.

3. A power transmission apparatus according to claim 1 or claim 2, wherein the power transmission mechanism comprises an idler gear linking the sub-shaft and the power distribution apparatus.

4. A power transmission apparatus according to any one of claim 1 to claim 3, wherein the power distribution apparatus has a differential mechanism allowing differential rotation between the output shafts.

5. A power transmission apparatus according to any one of claim 1 to claim 3, wherein the power distribution apparatus transmits drive power to one output shaft, the drive power to the other output shaft being limited to a desired amount, responsive to a condition at the one output shaft, and a coupling is provided which cuts off the drive power.

6. A power transmission apparatus according to claim 5, wherein the coupling is a rotational differentially adaptive coupling, which sends a drive power responsive to a reduction in drive power transmitted to one output shaft, to the other output shaft.

7. A power transmission apparatus according to claim 4, wherein the coupling, responsive to a change in the drive power transmitted to one output shaft, arbitrarily controls an amount of drive power sent to the other output shaft.

8. A power transmission apparatus according to claim 5, wherein the coupling comprises a coupling enabling switching between a two-wheel-drive mode, in which the coupling transmits drive power to only one output shaft, and a four-wheel-drive mode, in which the coupling transmits drive power equally to both output shafts.

9. A power transmission apparatus according to any one of claim 1 to claim 8, wherein the speed changing mechanism of the transmission apparatus is a stepless toroidal transmission comprising an input disc linked to an input shaft, an output disc linked to a transmission member on the output side, and a friction roller making contact with the discs, wherein a rocking operation of the friction roller changes the rotative speed of the input disc, which is transmitted to the output disc, and wherein a rotational direction conversion mechanism, which converts the drive power to forward rotation, is disposed between the transmission member and the sub-shaft.
